# EUROPEAN PATENT SPECIFICATION

(11) **EP 4 328 677 B1**
(45) Date of publication and mention of the grant of the patent: **07.10.2026**
(21) Application number: 22192223.0
(22) Date of filing: 25.08.2022
(51) Int. Cl.: G05B 15/02, D06F 34/28, D06F 37/42

(54) **SYSTEM AND METHOD FOR LOCKING A USER INTERFACE OF A HOUSEHOLD APPLIANCE**
SYSTEM UND VERFAHREN ZUM VERRIEGELN EINER BENUTZERSCHNITTSTELLE EINES HAUSHALTSGERÄTS
SYSTÈME ET PROCÉDÉ POUR VERROUILLER UNE INTERFACE UTILISATEUR D'UN APPAREIL ÉLECTROMÉNAGER

(43) Date of publication of application: 28.02.2024
(73) Proprietor: BSH Hausgeräte GmbH, 81739 München (DE)
(72) Inventor: Los-Brzozowska, Malgorzata, 02-222 Warzsawa (PL)

(56) References cited:
- CN-A- 113 789 635
- US-A1- 2018 276 630

## Description

The present document relates to a system and a corresponding method, which are directed at controlling the user interface of a household appliance.

A household appliance, such as a washing machine, a dishwasher or a refrigerator, typically comprises a user interface with one or more control elements which may be actuated by a user of the appliance for setting a parameter of the appliance, for selecting an operating program of the appliance and/or for starting operation of a selected operating program of the appliance.

The user interface may exhibit a parental lock function which may be activated by a user to lock the one or more control elements of the user interface, thereby protecting the user interface from user inputs of a child or animal. The child lock function may be activated using a dedicated control element, wherein the provision of a dedicated control element typically increases the cost of the user interface. Furthermore, it may occur that a user forgets to activate the child lock function, thereby leaving the appliance unprotected from user inputs that are caused by a child.

CN 113 789 635 A proposes a child lock control method and US 2018/0276630 A1 discloses a mobile terminal capable of user identification based on artificial intelligence technology.

The present document addresses the technical problem of increasing the efficiency and the comfort-of-use of a child lock function of a user interface of a household appliance. The technical problem is solved by each one of the independent claims. Preferred examples are described in the dependent claims.

The invention comprises a system with a backend server and a control unit. The backend server and the control unit are described in more detail in the following.

According to an aspect, a control unit for controlling a user interface of a household appliance (such as a freezer, a dishwasher, an oven, a washing machine, a dryer, etc.) is described, wherein the user interface comprises a set of control elements (e.g., one or more buttons, one or more knobs, one or more sliders, etc.). The user interface may comprise a touch screen with one or more virtual control elements.

The control unit is configured to detect a sequence of actuations of the set of control elements. In particular, one or more actuations of one or more different control elements may be detected in a sequential manner. The sequence of actuations may indicate the one or more control elements that have been actuated, and the order in which the one or more control elements have been actuated. The sequence of actuations may comprise multiple actuations of the same control element. Alternatively, or in addition, the sequence of actuations may comprise actuations of different control elements.

The control unit is further configured to classify the detected sequence of actuations as being a normal sequence or an abnormal sequence. A normal sequence may be a sequence which has a relatively high probability (e.g., of 5% or more) of being caused by a user in the context of operation of the household appliance. On the other hand, an abnormal sequence may be a sequence which has a relatively low probability (e.g., less than 5%) of being caused by a user in the context of operation of the household appliance.

The control unit is configured to classify the detected sequence of actuations using a classification unit, wherein the classification unit has been pre-trained using training data which is indicative of normal and/or abnormal sequences of actuations. The training data may have been collected during (normal) operation of the household appliance (and/or of a household appliance of the same type). The training data has been collected in the backend server for household appliances (comprising training data from multiple different household appliances of the same type and/or model).

Hence, a (machined-learned) classification unit may be used to determine whether the detected sequence of actuation is a normal sequence (which is typical for normal operation of the household appliance) or is an abnormal sequence (which is typically not used for normal operation of the household appliance). The classification unit may e.g., comprise a trained artificial neural network.

The classification unit may have been trained for a particular user or household (based on training data for the particular user and/or household). Hence, a user and/or household specific classification unit may be used, thereby increasing the quality of the classification. Alternatively, or in addition, the classification unit may have been trained for a particular type or model of household appliances. Hence, a model and/or type specific classification unit may be used, thereby increasing the quality of the classification.

Furthermore, the control unit is configured to cause the user interface to be locked, if the detected sequence of actuations is classified to be an abnormal sequence. The user interface may be locked automatically (without any further user intervention), if the detected sequence of actuations is classified to be an abnormal sequence. As a result of locking of the user interface, a touch screen of the user interface may be blackened and/or turned off. Alternatively, or in addition, any further actuations of one or more control elements of the user interface may be ignored.

On the other hand, the control unit may be configured to operate the user interface and/or the household appliance in accordance to the detected sequence of actuations, if the detected sequence of actuation is classified to be a normal sequence.

Hence, a control unit is described which is configured to supervise the actuations of control elements, which are caused by a user of the household appliance, in order to detect an abnormal sequence of actuations (which may have been caused by a child or an animal), and to (automatically) put the user interface into a locked state, if an abnormal sequence of actuations is detected. As a result of this, a reliable and comfortable lock function is provided. Furthermore, the stress on the user interface, which is caused by abnormal use, may be reduced, thereby increasing the lifespan of the user interface.

The control unit may be configured to, repeatedly, append the detected sequence of actuations with a newly detected actuation (of a control element). Furthermore, the control unit may be configured to classify the appended sequence of actuations as being a normal sequence or an abnormal sequence, and cause the user interface to be locked, if the appended sequence of actuations is classified to be an abnormal sequence.

In particular, initially, a sequence comprising only a single actuation of a control element may be detected and classified. As one or more further actuations of one or more control elements are caused, the sequence may be appended with the one or more newly detected actuations. As the detected sequence of actuations grows longer, the probability may increase that the detected sequence is an abnormal sequence (e.g., once the sequence comprises 2 or more, or 3 or more actuations). As soon as the detected sequence of actuations is classified to be an abnormal sequence, the user interface may be locked (thereby ignoring any further actuations of one or more control elements of the user interface).

Hence, the control unit may be configured to analyze a sequence of actuations repeatedly, as the sequence of actuations is caused by a user. The user interface may be locked automatically, as soon as the sequence is detected to be an abnormal sequence. As a result of this, the quality and the speed of the automatic lock function may be increased.

The control unit may be configured to determine one or more characteristics of the one or more actuations and/or of a transition between two succeeding actuations of the detected sequence of actuations. The one or more characteristics may comprise a duration of an actuation, a strength of an actuation, and/or a time interval of the transition between two succeeding actuations. The control unit may be configured to classify the detected sequence of actuations as being a normal sequence or an abnormal sequence, in dependence of the one or more characteristics. By taking into account one or more characteristics of the individual actuations and/or of the transition between actuations, the reliability of the classification may be improved, thereby improving the quality of the automatic lock function.

The control unit may be configured to compare the detected sequence of actuations with a set of reference sequences (e.g., with 10 or more, or 50 or more, or 100 or more reference sequences). The set of reference sequences may comprise sequences of actuations that are each considered to be a normal sequence. The set of reference sequences may have been pre-defined based on training data (which is indicative of sequences of actuations that have been caused during normal operation of the household appliance and/or of the same type of household appliance). The set of reference sequences may have been defined by a human expert. The set of reference sequences may be stored on a memory unit of the household appliance and/or on a backend server.

The detected sequence of actuations may be classified as being a normal sequence or an abnormal sequence, in dependence of the comparison with the set of reference sequences. In particular, the detected sequence of actuations may be classified as being a normal sequence, if the detected sequence of actuations corresponds to a reference sequence comprised within the set of reference sequences. Alternatively, or in addition, the detected sequence of actuations may be classified as being an abnormal sequence, if the detected sequence of actuations does not correspond to any one of the reference sequences comprised within the set of reference sequences. By making use of a set of reference sequences, the robustness and the reliability of classification and of the automatic lock function may be increased.

The set of reference sequences may be ordered in accordance to a total number of actuations comprised within the respective reference sequences. In other words, the set of reference sequences may comprise a plurality of subsets of reference sequences for a corresponding plurality of different total numbers of actuations, wherein each subset comprises reference sequences having a particular total number of actuations. By way of example, subsets of reference sequences may be provided for total numbers of 1, 2, 3, 4 or more actuations.

The control unit may be configured to determine the total number of actuations comprised within the detected sequence of actuations. Furthermore, the control unit may be configured to identify the subset of reference sequences having the same total number of actuations as the detected sequence of actuations. The detected sequence of actuations may then be compared (exclusively) with the one or more reference sequences comprised within the identified subset of reference sequences, in order to classify the detected sequence of actuations as being a normal sequence or an abnormal sequence. As a result of this, the computational complexity of the automatic lock function may be reduced.

The control unit may be configured to determine an anomaly score for the detected sequence of actuations based on a pre-determined probability model for actuations of the set of control elements of the user interface. The pre-determined probability model may indicate, for each one of a set of previous actuations, a probability value for each one of a plurality of different subsequent actuations following the respective previous actuation. By way of example, the probability model may comprise a matrix, with one dimension (e.g., the different rows) indicating the plurality of different previous actuations (of a corresponding plurality of control elements), and with the other dimension (e.g., the different columns) indicating a plurality of different subsequent actuations (of a corresponding plurality of control elements). The matrix element for a particular previous actuation and a particular subsequent actuation may indicate the transition probability for the situation that the particular subsequent actuation (directly) follows the particular previous actuation. The probability model may have been determined based on the training data.

The control unit may be configured to classify the detected sequence of actuations as being a normal sequence or an abnormal sequence, in dependence on the anomaly score. In particular, the control unit may be configured to select an actuation from the detected sequence of actuations (as being the previous actuation). Furthermore, the subsequent actuation which (directly) follows the selected actuation from the detected sequence of actuations may be determined, and the probability value for the determined subsequent actuation (and the selected previous actuation) may be determined using the probability model. The anomaly score for the detected sequence of actuations may then be determined in a precise manner based on the determined probability value.

The control unit may be configured to determine the anomaly score for the detected sequence of actuations based on a pre-determined anomaly index, wherein the anomaly index may indicate, for each one of a plurality of index numbers of an actuation within a sequence of actuations, a probability for the fact that a sequence of actuations comprising an actuation with the corresponding index number is an abnormal sequence. The index numbers may be integers starting from 1 (for the first actuation), 2 (for the second actuation), 3 (for the third actuation), etc. The anomaly index typically increases with increasing index number (notably in case of relatively high index numbers, e.g., greater than 2). The anomaly index may have been determined based on the training data regarding actuations which have been caused during operation of the household appliance. By taking into account the anomaly index, the precision of the classification may be further increased.

The control unit may be configured to, iteratively, update the anomaly score, as the detected sequence of actuations is appended with one or more newly detected actuations. The appended sequence of actuations may then be classified as being a normal sequence or an abnormal sequence, in dependence of the updated anomaly score.

The control unit may be configured to update the anomaly score e.g., using the iterative formula sₙ₊₁=sₙ+s, wherein sₙ is the anomaly score for the n actuations of the detected sequence of actuations, wherein s is a score for the newly detected actuation, wherein the score s is dependent on the probability model, and wherein sₙ₊₁ is the updated anomaly score for the appended sequence of actuations, which includes the n actuations and the newly detected actuation. The score s for the newly detected actuation may be determined based on the probability value for the transition from the (last actuation of the) detected sequence of actuations to the newly detected actuation. Furthermore, the score s for the newly detected actuation may be determined based on the anomaly index for the index number of the newly detected actuation within the appended sequence of actuations.

The control unit may be configured to compare the (updated) anomaly score with a pre-determined anomaly threshold (which may have been determined based on the training data). The appended and/or detected sequence of actuations may then be classified as being a normal sequence or an abnormal sequence, in dependence of the comparison. In particular, the appended and/or detected sequence of actuations may be classified to be a normal sequence, if the (updated) anomaly score is smaller than the anomaly threshold. On the other hand, the appended and/or detected sequence of actuations may be classified to be an abnormal sequence, if the (updated) anomaly score is greater than the anomaly threshold.

The above-mentioned iterative scheme for updating the anomaly score enables an abnormal sequence to be detected in a particularly rapid manner, thereby increasing the quality of the automatic lock function.

According to a further aspect, a household appliance is described which comprises the control unit that is described in the present document. Furthermore, the appliance comprises a user interface with a set of control elements (e.g., 2 or more, or 3 or more, or 4 or more control elements).

The backend server of the above-mentioned system is configured to collect data regarding the actuations of the set of control elements of the home appliance as training data and to collect in addition training data from multiple different household appliances of the same type and/or model as the household appliance.

According to another aspect, a method for controlling a user interface of a household appliance (e.g., of a dishwasher, an oven, a refrigerator, a washing machine, a dryer, etc.) is described, wherein the user interface comprises a set of control elements. The method comprises detecting a sequence of actuations of the set of control elements (wherein each actuation typically corresponds to the actuation of an individual control element).

Furthermore, the method comprises classifying the detected sequence of actuations as being a normal sequence or an abnormal sequence (e.g., using a machine-learned classification unit). In addition, the method comprises locking the user interface, if the detected sequence of actuations is classified to be an abnormal sequence.

The detected sequence of actuations is classified using a classification unit, which has been pre-trained using training data indicative of normal and/or abnormal sequences of actuations, wherein the training data have been collected in a backend server from the household appliance and from multiple different household appliances of the same type and/or model as the household appliance, wherein the training data relates to actuations of control elements of the household appliances.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The invention is explained below in an exemplary manner with reference to the accompanying drawings, wherein
Figure 1 shows an example household appliance;
Figure 2a shows an example sequence of actuations of the set of control elements of a household appliance;
Figure 2b illustrates the evolution of the anomaly score for an example sequence of actuations; and
Figure 3 shows a flow chart of an example method for controlling the user interface of a household appliance.

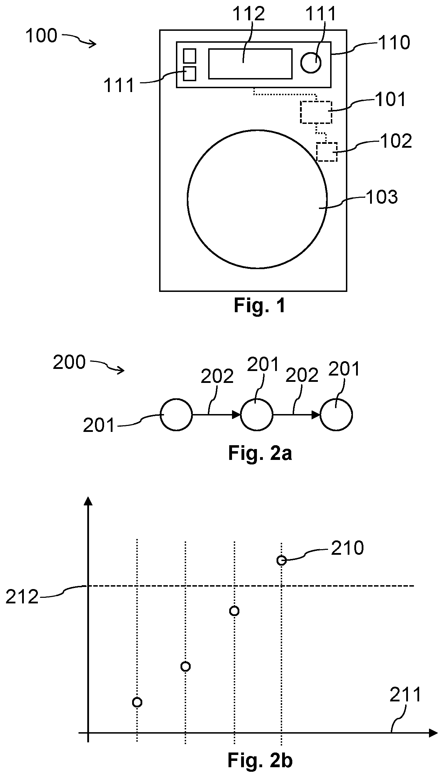

As outlined above, the present document is directed at increasing the efficiency, the reliability and/or the comfort-of-use of the lock function of a user interface of a household appliance. In this context, Fig. 1 shows an example household appliance 100, notably a washing machine or a dryer, which comprises a cavity 103, e.g., a drum, for processing an item, such as a clothes item or a food item. The processing may be performed by one or more actuators 102, such as a heating unit or an electrical motor, wherein the one or more actuators 102 a controlled by a control unit 101 of the appliance 100.

The appliance 100 comprises a user interface 110, wherein the user interface 110 may comprise a display 112 for providing visual feedback to the user of the appliance 100, and/or one or more control elements 111, such as one or more press buttons, one or more virtual buttons on a touch screen, a knob, a slider, etc.

The control unit 101 may be configured to detect one or more actuations of the one or more control elements 111 of the user interface 110. Furthermore, the control unit 101 may be configured to operate the appliance 100 in dependence of the one or more detected actuations. By way of example, a value of a parameter of the appliance 100 and/or an operating program (e.g., a washing program) of the appliance 100 may be set in dependence of the one or more detected actuations. Alternatively, or in addition, an operating program of the household appliance 100 may be started or stopped in dependence of the one or more detected actuations.

The user interface 110 of the appliance 100 may comprise a dedicated control element 111 for activating or for deactivating a lock function of the user interface 110. If the lock function of the user interface 110 is activated, actuations of the one or more control elements 111 of the user interface 110 and the corresponding user inputs may be ignored. Actuations of the one or more control elements 111 may only be taken into account as user inputs, if the lock function is deactivated. The lock function may protect the appliance 100 from user inputs that are caused by a child or by an animal.

It may occur that a user forgets to activate the lock function, thereby leaving the appliance 100 unprotected from user inputs that are caused by a child. Furthermore, a user may consider the explicit activation of the lock function to be uncomfortable. In addition, the provision of a dedicated control element 111 for activating and deactivating the lock function may lead to an increased cost of the user interface 110.

The control unit 101 may be configured to detected a sequence of actuations of the one or more control elements 111 from the set of control elements 111 of the user interface 110.

Fig. 2a shows an example sequence 200 of actuations 201. The different actuations 201 may exhibit certain characteristics, such as
- the duration of the actuation; and/or
- the strength of the actuation.

The sequence 200 of actuations 201 may further be indicative of the transitions 202 between the individual actuations 201. The transition 202 between two actuations 201 may exhibit a certain duration or time interval.

The control unit 101 may be configured to analyze the detected sequence 200 of actuations 201, notably with respect to
- the one or more control elements 111 that have been actuated;
- the order within which the one or more control elements 111 have been actuated;
- the duration of each actuation 201; and/or
- the time interval between two directed succeeding actuations 201.

In particular, the control unit 101 may be configured, notably based on the analysis of the detected sequence 200 of actuations 201, to determine, notably to classify, whether the detected sequence 200 of actuations 201 is a "normal sequence" or an "abnormal sequence". A "normal sequence" may be a sequence which has a relatively high probability of being caused by an adult (in a deterministic manner) for interacting with the appliance 100. On the other hand, an "abnormal sequence‴ may be a sequence which as a relatively high probability of being caused in a random and/or accidental manner (notably by a child).

The control unit 101 may be configured to automatically activate the lock function of the user interface 110, if the detected sequence 200 of actuations 201 is classified to be an "abnormal sequence". On the other hand, the appliance 100 may be operated in dependence of the detected sequence 200 of actuations 201, if the detected sequence 200 is classified to be a "normal sequence". By doing this, the lock function may be activated in a comfortable, reliable and efficient manner.

As indicated above, home appliances 100 may be controlled using a touch screen (with one or more virtual control elements 111). In some appliances 100, a change of default option settings may be caused by a user via the user interface 110 of the appliance 100. The appliances 100 typically have a feature of parental lock, so that undesired option setting changes may be prevented. In some appliances 100 the start of an operating cycle may be prevented with such a child lock function.

However, it may occur that a user forgets to turn on the lock. Furthermore, with the turned-on lock, it may occur that the touch screen of the appliance 110 is touched by a child or an animal, due to an image of one or more control elements 111 being shown on the touch screen. This could cause an undesired start of an operating program of the home appliance 100. Furthermore, the touch screen may be subjected to excessive use which could shorten the lifetime of the touch screen. In addition, the sound of pressing buttons may be annoying.

The present document describes means for turning the touch screen into a 'ghost' mode, i.e., into a black and silent screen, once the child lock is turned on. The activation of the child lock may be performed in an automated manner or may require the user's approval. In both cases, the ghost lock may be triggered by a real-time artificial intelligence algorithm. Unlocking of the appliance 100 may e.g., be performed by a specific button combination and/or by a specific button of the appliance 100 or within an SW application on a remote user device (such as a smartphone). As such, means are described for improving the safety of a home appliance 100, to prolong the lifetime of a touch screen and/or to improve the user experience of the home appliance 100.

In the present document a lock function is described, which works in an automated manner, relieving the user by applying an artificial intelligence algorithm. The algorithm may be focused on pattern mining for finding an anomaly in the use of the home appliance 100 based on a detected sequence 200 of buttons 111 that are being pressed. The algorithm may be home appliance 100 and/or model specific.

Data regarding the actuations 201 of control elements 111 of a home appliance 100 (notably of a particular type of home appliance 100 and/or of a particular model of the home appliance 100) are collected within a backend server as training data. The training data may comprise information on characteristics of the individual actuations 201 and/or of the settings that have been changed.

The collected data may be transformed into flat files (e.g., a table) so that each event (e.g., each chosen program, each temperature value) has its own row. This is a so-called long table. After further transformations and some logic applied, specific cycles may be distinguished. The resulting table may be relatively wide, wherein a row may be for an entire cycle of an operating program of the appliance 100. Those files may be stored in a Central Data Lake.

The collected training data may be used to enable the "ghost lock" function. For this purpose, data may be considered for each actuation 201 of a control element 111 (regardless if the actuation 201 occurred before or after the start of an operating cycle of the appliance 100). In particular, a set of reference sequences of actuations 201 may be defined based on the collected training data, wherein each reference sequence corresponds to a "normal" user interaction (i.e., to a normal sequence). The set of reference sequences may be defined by a human expert. Furthermore, the set of reference sequences may comprise sequences 200 of different lengths, i.e., of a different number of actuations 201. However, the reference sequences may have a maximum length.

During operation of the appliance 100, the detected sequence 200 of actuations 201, which is being caused by a user, may be compared with the set of reference sequences. This comparison may be performed repeatedly, as the actuations 201 are being caused (i.e., as the detected sequence 200 grows longer). For increasing the calculation speed, the set of reference sequences may be grouped into lists and/or arrays and/or subsets in accordance to their total length. An iterator may be used, which is a variable of integer type that stores the number of actuations 201 within the detected sequence 200 of actuations 201 that is being caused by a user. The reference sequences having a total length equal to the iterator value may be identified, and may be compared with the detected sequence 200. An "abnormal" sequence or pattern may be detected to be a sequence 200 that is not classified as being a "normal" sequence based on the comparison with the set of reference sequences. An "abnormal" sequence may be e.g., a sequence 200 comprising multiple presses 201 on the same control element 111, too many presses 201, etc.

When an abnormal use of the appliance 100 is detected, the smart ghost lock may be automatically activated.

Alternatively, or in addition, an Accumulative Damage Model (ADM) may be used to detected an abnormal sequence. For this purpose, a two-dimensional matrix of probabilities (more generally a probability model) of different subsequent actuations 201 (subsequent to the zero, one or more previous actuations 201 that have already been caused) may be determined (based on the collected training data). Each subsequent actuation 201 has a certain probability to be chosen subsequent to the zero, one or more previous actuations 201 (e.g., if the temperature has been set in a previous step, there is a relatively low probability that the user sets the temperature again in the subsequent step).

Hence, based on collected training data a probability model may be generated which indicates the probability of a subsequent actuation 201 subsequent to a sequence 200 of zero, one or more already performed (i.e., previous) actuations 201.

During input of a sequence 200 of actuations 201, an anomaly score may be updated after each actuation 201 using the pre-determined probability model. Furthermore, the anomaly score may be compared with an anomaly threshold. If the anomaly score is smaller than the anomaly threshold, the sequence 200 of actuations 201 is considered to be a normal sequence. On the other hand, if the anomaly score is greater than the anomaly threshold, the sequence 200 of actuations 201 is considered to be an abnormal sequence.

The anomaly score may be updated iteratively subsequent to each newly detected actuation 201, e.g., using the following formula, sₙ₊₁=sₙ+s, wherein sₙ is the anomaly score for the previous n actuations 201, s is the score of the newly detected actuation 201, and sₙ₊₁ is the anomaly score for the n+1 actuations 201 (including the newly detected actuation 201).

The score s for the newly detected actuation 201 may be determined based on the pre-determined probability model. p may be the probability of the newly detected actuation 201 (knowing the one or more previous actuations 201). The score s for the detected actuation 201 may then be determined based on (1-p), such that the score is relatively high for a relatively unlikely actuation 201, and relatively small for a relatively likely actuation 201.

Furthermore, an anomaly index "aₙ₊₁" may be taken into account, which depends on the value n+1 of the iterator and/or index number of the newly detected actuation 201. The anomaly index may increase with an increasing number and/or index number of an actuation 201 within the detected sequence 200. The anomaly index "aₙ₊₁" may be determined based on the collected training data. The score s for the detected actuation 201 may be determined based on the anomaly index "aₙ₊₁", e.g., based on (1-p)* aₙ₊₁, notably s=(1-p)* aₙ₊₁.

The formula for determining the anomaly score may make use of a scaling factor. The anomaly threshold and/or the formula for determining the anomaly score may be determined in the context of a training process, based on the collected training data. The training may be performed in an appliance specific and/or user specific manner. The automatic detection of an abnormal use may be activated only subsequent to collecting sufficient training data for performing the training process.

As soon as the detected sequence 200 is detected to be an abnormal sequence, the ghost lock of the user interface 100 may be activated.

Fig. 2b illustrates an example evolution of the value of the anomaly score 210, with increasing total length of the detected sequence 200 of actuations 201. Upon the detection of the first actuation 201 (with index number 211 n=1), a relatively low anomaly score 210 (s₁) is determined and compared with the anomaly threshold 212, thereby classifying the sequence 200 which comprises only the first actuation 201 as being a normal sequence. Upon detection of the next (second) actuation 201 (n=2), the anomaly score 210 (s₂) is updated and compared with the anomaly threshold 212. In the illustrated example, upon detection of the fourth actuation 201 (n=4), the anomaly score 210 (s₄) exceeds the anomaly threshold 212, thereby classifying the sequence 200 of actuation 201 as being abnormal, and thereby causing the user interface 110 to be locked.

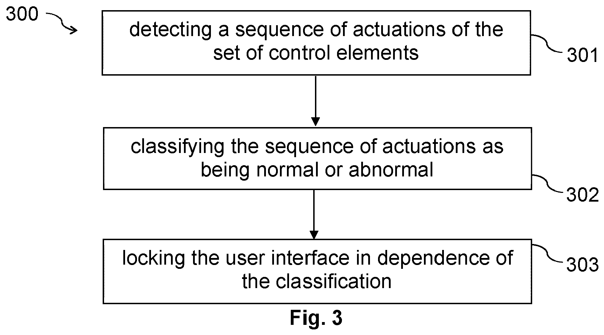

Fig. 3 illustrates a flow chart of an example method 300 for controlling a user interface 110 of a household appliance 100, wherein the user interface 110 comprises a set of control elements 111 (e.g., one or more buttons, and/or one or more knobs, and/or one or more sliders).

The method 300 comprises detecting 301 a sequence 200 of actuations 201 of the set of control elements 111. The sequence 200 may indicate for each actuation 201 the control element 111 that has been actuated. Hence, the sequence 200 may indicate the one or more control elements 111 that have been actuated. Furthermore, the order, in which the one or more control elements 111 have been actuated, may be indicated. The user interface 110 may e.g., comprise the control elements 111 "A", "B", and "C". The detected sequence 202 of actuations 201 may be "A", "A", "C", "A", thereby indicating that the control element "A" has been actuated first, followed by another actuation 201 of the control element "A", followed by an actuation 201 of the control element "C", and followed by another actuation 201 of the control element "A".

Hence, the detected sequence 200 of actuations 201 may indicate how (notably in which order) the control elements 111 of the user interface 110 have been actuated (e.g., touched, in case of virtual control elements 111 on a touch screen).

The method 300 further comprises classifying 302 the detected sequence 200 of actuations 201 as being a normal sequence or an abnormal sequence. The classification is performed using a trained classification unit, which has been trained using collected training data regarding actual actuations 201 of the control elements 111 of the user interface 110. The classification unit may have been trained using machine learning. Hence, artificial intelligence may be used to classify the detected sequence 200 as being normal or abnormal.

Furthermore, the method 300 comprises locking 303 the user interface 110, if the detected sequence 200 of actuations 201 is classified to be an abnormal sequence. The user interface 110 may be locked automatically, if an abnormal sequence 200 of actuations 201 is detected. This may involve blackening and/or turning off of a touch screen of the user interface 110.

The measures which have been outlined in the present document enable an improved safety of the use of a home appliance 100. Furthermore, the lifetime of a touch screen may be increased. In addition, the user experience of an appliance 100 may be improved. It should be noted that the description and drawings merely illustrate the principles of the proposed methods and systems. Those skilled in the art will be able to implement various arrangements that, although not explicitly described or shown herein, embody the principles of the invention and are included within its scope. Furthermore, all examples and embodiment outlined in the present document are principally intended expressly to be only for explanatory purposes to help the reader in understanding the principles of the proposed methods and systems.

## Claims

1. A system comprising a backend server and a control unit (101) for controlling a user interface (110) of a household appliance (100), which comprises a set of control elements (111); wherein the control unit (101) is configured to
- detect a sequence (200) of actuations (201) of the set of control elements (111);
- classify the detected sequence (200) of actuations (201) as being a normal sequence or an abnormal sequence using a classification unit; and
- cause the user interface (110) to be locked, if the detected sequence (200) of actuations (201) is classified to be an abnormal sequence;
**characterized in that**
- the classification unit has been pre-trained using training data indicative of normal and/or abnormal sequences of actuations (201),
- wherein the backend server is configured to collect data regarding the actuations (201) of the set of control elements (111) of the household appliance (100) as training data and to collect in addition training data from multiple different household appliances of the same type and/or model as the household appliance.

2. The system according to any one of the previous claims, wherein the control unit (101) is configured to
- determine an anomaly score (210) for the detected sequence (200) of actuations (201) based on a pre-determined probability model for actuations (201) of the set of control elements (111) of the user interface (110); and
- classify the detected sequence (200) of actuations (201) as being a normal sequence or an abnormal sequence, in dependence on the anomaly score (210).

3. The system according to claim 2, wherein
- the pre-determined probability model indicates, for each one of a set of previous actuations (201), a probability value for each one of a plurality of different subsequent actuations (201) following the respective previous actuation (201); and
- the control unit (101) is configured to
- select an actuation (201) from the detected sequence (200) of actuations (201);
- determine the subsequent actuation (201) which follows the selected actuation (201) from the detected sequence (200) of actuations (201);
- determine a probability value for the determined subsequent actuation (201) using the probability model; and
- determine the anomaly score (210) for the detected sequence (200) of actuations (201) based on the determined probability value.

4. The system according to any of claims 2 to 3, wherein
- the control unit (101) is configured to determine the anomaly score (210) for the detected sequence (200) of actuations (201) based on a pre-determined anomaly index; and
- the anomaly index indicates, for each one of a plurality of index numbers (211) of an actuation (201) within a sequence of actuations (201), a probability for the fact that a sequence of actuations (201) comprising an actuation (201) with the corresponding index number (211) is an abnormal sequence.

5. The system according to any of claims 2 to 4, wherein the control unit (101) is configured to, iteratively,
- update the anomaly score (210), as the detected sequence (200) of actuations (201) is appended with one or more newly detected actuations (201); and
- classify the appended sequence (200) of actuations (201) as being a normal sequence or an abnormal sequence, in dependence of the updated anomaly score (210).

6. The system according to claim 5, wherein
- the control unit (101) is configured to update the anomaly score (210) using the iterative formula sₙ₊₁=sₙ+s;
- sₙ is the anomaly score (210) for the n actuations (201) of the detected sequence (200) of actuations (201);
- s is a score for the newly detected actuation (201), which is dependent on the probability model; and
- sₙ₊₁ is the updated anomaly score (210) for the appended sequence (200) of actuations (201), which includes the n actuations (201) and the newly detected actuation (201).

7. The system according to any one of previous claims, wherein the control unit (101) is configured to, repeatedly,
- append the detected sequence (200) of actuations (201) with a newly detected actuation (201);
- classify the appended sequence (200) of actuations (201) as being a normal sequence or an abnormal sequence; and
- cause the user interface (110) to be locked, if the appended sequence (200) of actuations (201) is classified to be an abnormal sequence.

8. The system according to any one of previous claims, wherein the control unit (101) is configured to,
- determine one or more characteristics of the one or more actuations (201) and/or of a transition between two succeeding actuations (201) of the detected sequence of actuations (201); wherein the one or more characteristics comprise one or more of,
- a duration of the actuation (201);
- a strength of the actuation (201); and/or
- a time interval of the transition between two succeeding actuations (201); and
- classify the detected sequence (200) of actuations (201) as being a normal sequence or an abnormal sequence, in dependence of the one or more characteristics.

9. The system according to any one of previous claims, wherein the control unit (101) is configured to
- automatically lock the user interface (110), if the detected sequence (200) of actuations (201) is classified to be an abnormal sequence; and/or
- blacken and/or turn off a touch screen of the user interface (110) in the context of locking the user interface (110).

10. The system according to any one of the previous claims, further comprising a household appliance (100) comprising
- a user interface (110) with a set of control elements (111); and
- the control unit (101), which is configured to cause the user interface (110) to be locked.

11. A method (300) for controlling a user interface (110) of a household appliance (100), which comprises a set of control elements (111); wherein the method (300) comprises
- detecting (301) a sequence (200) of actuations (201) of the set of control elements (111);
- classifying (302) the detected sequence (200) of actuations (201) as being a normal sequence or an abnormal sequence; and
- locking (303) the user interface (110), if the detected sequence (200) of actuations (201) is classified to be an abnormal sequence;
**characterized in that**
- the detected sequence (200) of actuations (201) is classified using a classification unit, which has been pre-trained using training data indicative of normal and/or abnormal sequences of actuations (201),
- wherein the training data have been collected in a backend server from the household appliance and from multiple different household appliances of the same type and/or model as the household appliance, wherein the training data relates to actuations of control elements of the household appliances.

## Patentansprüche

1. System, das einen Backend-Server und eine Steuereinheit (101) zum Steuern einer Benutzerschnittstelle (110) eines Haushaltsgeräts (100) mit einem Satz Bedienelemente (111) umfasst, wobei die Steuereinheit (101) so konfiguriert ist, dass sie:
- eine Abfolge (200) von Betätigungen (201) des Satzes Bedienelemente (111) erkennt,
- die erkannte Abfolge (200) von Betätigungen (201) mithilfe einer Klassifizierungseinheit als normale oder als ungewöhnliche Abfolge klassifiziert und
- ein Sperren der Benutzerschnittstelle (110) bewirkt, wenn die erkannte Abfolge (200) von Betätigungen (201) als ungewöhnliche Abfolge klassifiziert wird,
**dadurch gekennzeichnet, dass**
- die Klassifizierungseinheit im Vorhinein anhand von Trainingsdaten trainiert wurde, die auf normale und/oder ungewöhnliche Abfolgen von Betätigungen (201) hindeuten,
- wobei der Backend-Server so konfiguriert ist, dass er Daten zu den Betätigungen (201) des Satzes Bedienelemente (111) des Haushaltgeräts (100) als Trainingsdaten und zusätzlich dazu Trainingsdaten von mehreren verschiedenen Haushaltsgeräten vom gleichen Typ und/oder Modell wie das Haushaltsgerät sammelt.

2. System nach einem der vorhergehenden Ansprüche, wobei die Steuereinheit (101) so konfiguriert ist, dass sie:
- auf der Grundlage eines vorgegebenen Wahrscheinlichkeitsmodells für Betätigungen (201) des Satzes Bedienelemente (111) der Benutzerschnittstelle (110) einen Anomalie-Score (210) für die erkannte Abfolge (200) von Betätigungen (201) ermittelt, und
- die erkannte Abfolge (200) von Betätigungen (201) in Abhängigkeit von dem Anomalie-Score (210) als normale oder als ungewöhnliche Abfolge klassifiziert.

3. System nach Anspruch 2, wobei
- das vorgegebene Wahrscheinlichkeitsmodell für jede aus einem Satz vorheriger Betätigungen (201) einen Wahrscheinlichkeitswert für jede von mehreren verschiedenen nachfolgenden Betätigungen (201) nach der jeweiligen vorherigen Betätigung (201) angibt, und
- die Steuereinheit (101) so konfiguriert ist, dass sie:
- eine Betätigung (201) aus der erkannten Abfolge (200) von Betätigungen (201) auswählt,
- die nach der ausgewählten Betätigung (201) aus der erkannten Abfolge (200) von Betätigungen (201) folgende Betätigung (201) ermittelt,
- mithilfe des Wahrscheinlichkeitsmodells einen Wahrscheinlichkeitswert für die ermittelte nachfolgende Betätigung (201) ermittelt und
- auf der Grundlage des ermittelten Wahrscheinlichkeitswerts den Anomalie-Score (210) für die erkannte Abfolge (200) von Betätigungen (201) ermittelt.

4. System nach einem der Ansprüche 2 bis 3, wobei
- die Steuereinheit (101) so konfiguriert ist, dass sie auf der Grundlage eines vorgegebenen Anomalieindex den Anomalie-Score (210) für die erkannte Abfolge (200) von Betätigungen (201) ermittelt, und
- der Anomalieindex für jede von mehreren Indexzahlen (211) für eine Betätigung (201) innerhalb einer Abfolge von Betätigungen (201) eine Wahrscheinlichkeit für die Tatsache angibt, dass es sich bei einer Abfolge von Betätigungen (201), die eine Betätigung (201) mit der entsprechenden Indexzahl (211) umfasst, um eine ungewöhnliche Abfolge handelt.

5. System nach einem der Ansprüche 2 bis 4, wobei die Steuereinheit (101) so konfiguriert ist, dass sie iterativ:
- den Anomalie-Score (210) aktualisiert, wenn eine oder mehrere neu erkannte Betätigungen (201) an die erkannte Abfolge (200) von Betätigungen (201) angehängt werden, und
- die angehängte Abfolge (200) von Betätigungen (201) in Abhängigkeit von dem aktualisierten Anomalie-Score (210) als normale oder ungewöhnliche Abfolge klassifiziert.

6. System nach Anspruch 5, wobei
- die Steuereinheit (101) so konfiguriert ist, dass sie den Anomalie-Score (210) mithilfe der iterativen Formel sₙ₊₁ = sₙ + s aktualisiert,
- sₙ der Anomalie-Score (210) für die n Betätigungen (201) aus der erkannten Abfolge (200) von Betätigungen (201) ist,
- s ein Score für die neu erkannte Betätigung (201) ist, der von dem Wahrscheinlichkeitsmodell abhängig ist, und
- sₙ₊₁ der aktualisierte Anomalie-Score (210) für die angehängte Abfolge (200) von Betätigungen (201) ist, die die n Betätigungen (201) und die neu erkannte Betätigung (201) enthält.

7. System nach einem der vorhergehenden Ansprüche, wobei die Steuereinheit (101) so konfiguriert ist, dass sie wiederholt:
- eine neu erkannte Betätigung (201) an die erkannte Abfolge (200) von Betätigungen (201) anhängt,
- die angehängte Abfolge (200) von Betätigungen (201) als normale oder als ungewöhnliche Abfolge klassifiziert und
- ein Sperren der Benutzerschnittstelle (110) bewirkt, wenn die angehängte Abfolge (200) von Betätigungen (201) als ungewöhnliche Abfolge klassifiziert wird.

8. System nach einem der vorhergehenden Ansprüche, wobei die Steuereinheit (101) so konfiguriert ist, dass sie:
- ein oder mehrere Merkmale der einen oder der mehreren Betätigungen (201) und/oder eines Übergangs zwischen zwei aufeinanderfolgenden Betätigungen (201) in der erkannten Abfolge von Betätigungen (201) ermittelt, wobei das eine oder die mehreren Merkmale Folgendes umfassen:
- eine Dauer der Betätigung (201),
- eine Heftigkeit der Betätigung (201) und/oder
- einen Zeitabstand beim Übergang zwischen zwei aufeinanderfolgenden Betätigungen (201), und
- die erkannte Abfolge (200) von Betätigungen (201) in Abhängigkeit von dem einen oder den mehreren Merkmalen als normale oder ungewöhnliche Abfolge klassifiziert.

9. System nach einem der vorhergehenden Ansprüche, wobei die Steuereinheit (101) so konfiguriert ist, dass sie:
- die Benutzerschnittstelle (110) automatisch sperrt, wenn die erkannte Abfolge (200) von Betätigungen (201) als ungewöhnliche Abfolge klassifiziert wird, und/oder
- einen berührungsempfindlichen Bildschirm der Benutzerschnittstelle (110) im Zusammenhang mit einer Sperrung der Benutzerschnittstelle (110) aus- und/oder abschaltet.

10. System nach einem der vorhergehenden Ansprüche, das ferner ein Haushaltsgerät (100) mit Folgendem umfasst:
- einer Benutzerschnittstelle (110) mit einem Satz Bedienelemente (111) und
- der Steuereinheit (101), die so konfiguriert ist, dass sie ein Sperren der Benutzerschnittstelle (110) bewirkt.

11. Verfahren (300) zum Steuern einer Benutzerschnittstelle (110) eines Haushaltsgeräts (100), das einen Satz Bedienelemente (111) umfasst, wobei das Verfahren (300) Folgendes umfasst:
- Erkennen (301) einer Abfolge (200) von Betätigungen (201) des Satzes Bedienelemente (111),
- Klassifizieren (302) der erkannten Abfolge (200) von Betätigungen (201) als normale oder als ungewöhnliche Abfolge und
- Sperren (303) der Benutzerschnittstelle (110), wenn die erkannte Abfolge (200) von Betätigungen (201) als ungewöhnliche Abfolge klassifiziert wird,
**dadurch gekennzeichnet, dass**
- die erkannte Abfolge (200) von Betätigungen (201) mithilfe einer Klassifizierungseinheit klassifiziert wird, die im Vorhinein anhand von Trainingsdaten trainiert wurde, die auf normale und/oder ungewöhnliche Abfolgen von Betätigungen (201) hindeuten,
- wobei die Trainingsdaten von dem Haushaltsgerät und mehreren verschiedenen Haushaltsgeräten vom gleichen Typ und/oder Modell wie das Haushaltsgerät in einem Backend-Server gesammelt wurden, wobei die Trainingsdaten Betätigungen von Bedienelementen der Haushaltsgeräte betreffen.

## Revendications

1. Système comprenant un serveur dorsal et une unité de commande (101) pour commander une interface utilisateur (110) d'un appareil électroménager (100), qui comprend un ensemble d'éléments de commande (111) ; dans lequel l'unité de commande (101) est configurée pour
- détecter une séquence (200) d'actionnements (201) de l'ensemble d'éléments de commande (111) ;
- classer la séquence détectée (200) d'actionnements (201) comme étant une séquence normale ou une séquence anormale en utilisant une unité de classification ; et
- provoquer le verrouillage de l'interface utilisateur (110), si la séquence détectée (200) d'actionnements (201) est classée comme une séquence anormale ;
**caractérisé en ce que**
- l'unité de classification a été préentraînée en utilisant des données d'entraînement indicatives de séquences normales et/ou anormales d'actionnements (201),
- dans lequel le serveur dorsal est configuré pour collecter des données concernant les actionnements (201) de l'ensemble d'éléments de commande (111) de l'appareil électroménager (100) en tant que données d'entraînement, et pour collecter en outre des données d'entraînement provenant de multiples appareils électroménagers différents du même type et/ou modèle que l'appareil électroménager.

2. Système selon l'une quelconque des revendications précédentes, dans lequel l'unité de commande (101) est configurée pour
- déterminer un score d'anomalie (210) pour la séquence détectée (200) d'actionnements (201) sur la base d'un modèle de probabilité prédéterminé pour les actionnements (201) de l'ensemble d'éléments de commande (111) de l'interface utilisateur (110) ; et
- classer la séquence détectée (200) d'actionnements (201) comme étant une séquence normale ou une séquence anormale, en fonction du score d'anomalie (210).

3. Système selon la revendication 2, dans lequel
- le modèle de probabilité prédéterminé indique, pour chacun d'un ensemble d'actionnements précédents (201), une valeur de probabilité pour chacun d'une pluralité d'actionnements suivants différents (201) succédant à l'actionnement précédent respectif (201) ; et
- l'unité de commande (101) est configurée pour
- sélectionner un actionnement (201) parmi la séquence détectée (200) d'actionnements (201) ;
- déterminer l'actionnement suivant (201) qui succède à l'actionnement sélectionné (201) parmi la séquence détectée (200) d'actionnements (201) ;
- déterminer une valeur de probabilité pour l'actionnement suivant déterminé (201) en utilisant le modèle de probabilité ; et
- déterminer le score d'anomalie (210) pour la séquence détectée (200) d'actionnements (201) sur la base de la valeur de probabilité déterminée.

4. Système selon l'une quelconque des revendications 2 à 3, dans lequel
- l'unité de commande (101) est configurée pour déterminer le score d'anomalie (210) pour la séquence détectée (200) d'actionnements (201) sur la base d'un indice d'anomalie prédéterminé ; et
- l'indice d'anomalie indique, pour chacun d'une pluralité de numéros d'indice (211) d'un actionnement (201) dans une séquence d'actionnements (201), une probabilité qu'une séquence d'actionnements (201) comprenant un actionnement (201) avec le numéro d'indice correspondant (211) soit une séquence anormale.

5. Système selon l'une des revendications 2 à 4, dans lequel l'unité de commande (101) est configurée pour, de manière itérative,
- mettre à jour le score d'anomalie (210), à mesure que la séquence détectée (200) d'actionnements (201) est complétée par un ou plusieurs actionnements nouvellement détectés (201) ; et
- classer la séquence complétée (200) d'actionnements (201) comme étant une séquence normale ou une séquence anormale, en fonction du score d'anomalie mis à jour (210).

6. Système selon la revendication 5, dans lequel
- l'unité de commande (101) est configurée pour mettre à jour le score d'anomalie (210) en utilisant la formule itérative sₙ₊₁ = sₙ + s ;
- sₙ est le score d'anomalie (210) pour les n actionnements (201) de la séquence détectée (200) d'actionnements (201) ;
- s est un score pour l'actionnement nouvellement détecté (201), qui dépend du modèle de probabilité ; et
- sₙ₊₁ est le score d'anomalie mis à jour (210) pour la séquence complétée (200) d'actionnements (201), qui comprend les n actionnements (201) et l'actionnement nouvellement détecté (201).

7. Système selon l'une quelconque des revendications précédentes, dans lequel l'unité de commande (101) est configurée pour, de manière répétée,
- compléter la séquence détectée (200) d'actionnements (201) par un actionnement nouvellement détecté (201) ;
- classer la séquence complétée (200) d'actionnements (201) comme étant une séquence normale ou une séquence anormale ; et
- provoquer le verrouillage de l'interface utilisateur (110), si la séquence complétée (200) d'actionnements (201) est classée comme une séquence anormale.

8. Système selon l'une quelconque des revendications précédentes, dans lequel l'unité de commande (101) est configurée pour,
- déterminer une ou plusieurs caractéristiques du ou des plusieurs actionnements (201) et/ou d'une transition entre deux actionnements successifs (201) de la séquence détectée d'actionnements (201) ; dans lequel la ou les plusieurs caractéristiques comprennent un ou plusieurs parmi,
- une durée de l'actionnement (201) ;
- une intensité de l'actionnement (201) ; et/ou
- un intervalle de temps de la transition entre deux actionnements successifs (201) ; et
- classer la séquence détectée (200) d'actionnements (201) comme étant une séquence normale ou une séquence anormale, en fonction de la ou des plusieurs caractéristiques.

9. Système selon l'une quelconque des revendications précédentes, dans lequel l'unité de commande (101) est configurée pour
- verrouiller automatiquement l'interface utilisateur (110), si la séquence détectée (200) d'actionnements (201) est classée comme une séquence anormale ; et/ou
- assombrir et/ou désactiver un écran tactile de l'interface utilisateur (110) dans le cadre du verrouillage de l'interface utilisateur (110).

10. Système selon l'une quelconque des revendications précédentes, comprenant en outre un appareil électroménager (100) comprenant
- une interface utilisateur (110) dotée d'un ensemble d'éléments de commande (111) ; et
- l'unité de commande (101), qui est configurée pour provoquer le verrouillage de l'interface utilisateur (110).

11. Procédé (300) de commande d'une interface utilisateur (110) d'un appareil électroménager (100), qui comprend un ensemble d'éléments de commande (111) ; dans lequel le procédé (300) comprend
- la détection (301) d'une séquence (200) d'actionnements (201) de l'ensemble d'éléments de commande (111) ;
- la classification (302) de la séquence détectée (200) d'actionnements (201) comme étant une séquence normale ou une séquence anormale ; et
- le verrouillage (303) de l'interface utilisateur (110), si la séquence détectée (200) d'actionnements (201) est classée comme une séquence anormale ;
**caractérisé en ce que**
- la séquence détectée (200) d'actionnements (201) est classée en utilisant une unité de classification, qui a été préentraînée en utilisant des données d'entraînement indicatives de séquences normales et/ou anormales d'actionnements (201),
- dans lequel les données d'entraînement ont été collectées dans un serveur dorsal à partir de l'appareil électroménager et de multiples appareils électroménagers différents du même type et/ou modèle que l'appareil électroménager, dans lequel les données d'entraînement se rapportent à des actionnements d'éléments de commande des appareils électroménagers.
